(19) Europäisches Patentamt
European Patent Office
Office européen des brevets

(11) EP 2 928 953 B1

(12) EUROPÄISCHE PATENTSCHRIFT

(45) Veröffentlichungstag und Bekanntmachung des Hinweises auf die Patenterteilung:
**31.01.2018 Patentblatt 2018/05**

(21) Anmeldenummer: **13799541.1**

(22) Anmeldetag: **03.12.2013**

(51) Int Cl.:
***C08K 5/5399*** *(2006.01)* ***C08L 51/04*** *(2006.01)*
***C08L 69/00*** *(2006.01)*

(86) Internationale Anmeldenummer:
**PCT/EP2013/075432**

(87) Internationale Veröffentlichungsnummer:
**WO 2014/086800 (12.06.2014 Gazette 2014/24)**

# (54) FLAMMGESCHÜTZTE POLYCARBONATFORMMASSEN VI

FLAME-PROTECTED POLYCARBONATE MOULDED SUBSTANCES VI

MASSES DE FORMAGE EN POLYCARBONATE IGNIFUGES VI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2012 EP 12196048**

(43) Veröffentlichungstag der Anmeldung:
**14.10.2015 Patentblatt 2015/42**

(73) Patentinhaber: **Covestro Deutschland AG**
**51373 Leverkusen (DE)**

(72) Erfinder:
- **JUNG, Mathieu**
**200031 Shanghai (CN)**
- **ECKEL, Thomas**
**41540 Dormagen (DE)**
- **TASCHNER, Vera**
**40764 Langenfeld (DE)**

(74) Vertreter: **Levpat**
**c/o Covestro AG**
**Gebäude 4825**
**51365 Leverkusen (DE)**

(56) Entgegenhaltungen:
**DE-A1- 19 828 539 DE-B4- 10 393 198**
**JP-A- H04 345 657**

- **DATABASE WPI Week 200131 Thomson Scientific, London, GB; AN 2001-293898 XP002695686, -& JP 2000 351893 A (MITSUBISHI ENG PLASTICS KK) 19. Dezember 2000 (2000-12-19)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 928 953 B1

**Beschreibung**

Die vorliegende Erfindung betrifft flammgeschützte, schlagzähmodifizierte Polycarbonat (PC)-Zusammensetzungen mit cyclischen Phosphazenen, die exzellente mechanische Eigenschaften, eine sehr gute Flammwidrigkeit, eine hohe Chemikalienbeständigkeit und hohe Hydrolysestabilität aufweisen , sowie ihre Verwendung und Formkörper daraus. EP 1 095 099 A1 beschreibt mit Phosphazenen und Phosphorverbindungen ausgerüstete Polycarbonat-ABS-Formmassen, die einen ausgezeichneten Flammschutz und sehr gute mechanische Eigenschaften wie Bindenahtfestigkeit oder Kerbschlagzähigkeit aufweisen

EP 1 196 498 A1 beschreibt mit Phosphazenen ausgerüstete Formmassen auf Basis Polycarbonat und Pfropfpolymerisaten ausgewählt aus der Gruppe der Silkon-, EP(D)M- und Acrylatkautschuke als Pfropfgrundlage, die einen ausgezeichneten Flammschutz und sehr gute mechanische Eigenschaften wie Spannungsrissbeständigkeit oder Kerbschlagzähigkeit aufweisen

EP 1 095 100 A1 beschreibt Polycarbonat/ABS-Formmassen, enthaltend Phosphazene und anorganische Nanopartikel, die einen ausgezeichneten Flammschutz und sehr gute mechanische Eigenschaften aufweisen

EP 1 095 097 A1 beschreibt mit Phosphazenen ausgerüstete Polycarbonat-ABS-Formmassen, die einen ausgezeichneten Flammschutz und sehr gute Verarbeitungseigenschaften aufweisen, wobei das Pfropfpolymerisat mittels Masse-, Lösungs- oder Masse-Suspensions-Polymerisationsverfahren hergestellt wird

JP 2000 351893 offenbart schlagzähmodifierte Polycrabonat-Formmassen mit Phosphazenen., die sich durch eine gute Hydrolysebeständigkeit, guten Flammschutz und Stabilität der elektrischen Eigenschaften auszeichnen.

In den oben genannten Dokumenten werden lineare und cyclische Phosphazene offenbart. Bei den cyclischen Phosphazenen werden die Anteile von Trimeren, Tetrameren und höheren Oligomeren jedoch nicht spezifiziert,

JP 1995 0038462 beschreibt Polycarbonat-Zusammensetzungen, enthaltend Pfropfpolymere, Phosphazene als Flammschutzmittel und optional Vinylcopolymere. Spezifische Strukturen, Zusammensetzungen und Mengen des Flammschutzmittels werden jedoch nicht genannt.

JP19990176718 beschreibt thermoplastische Zusammensetzungen bestehend aus aromatischem Polycarbonat, Copolymer aus aromatischen Vinylmonomeren und Vinylcyaniden, Propfpolymer aus Alkyl(meth)acrylaten und Kautschuk und Phosphazen als Flammschutzmittel, die eine gute Fließfähigkeit aufweisen.

Aufgabe der vorliegenden Erfindung ist somit die Bereitstellung einer flammgeschützten Formmasse, die sich durch eine Eigenschaftskombination aus hoher Hydrolysestabilität, hoher Chemikalienbeständigkeit (ESC-Verhalten) und hohem E-Modul bei gleichbleibend guten mechanischen Eigenschaften auszeichnet.

Ferner ist es Aufgabe der Erfindung, flammgeschützte Formmassen bereitzustellen, die bei gutem Flammschutz nur einen geringen Phosphazengehalt aufweisen, da Flammschutzmittel ein wesentlicher Kostenfaktor bei der Herstellung dieser Zusammensetzungen ist, so daß diese kostengünstiger werden.

Bevorzugt sind die Formmassen flammwidrig und erfüllen die Anforderungen UL94 mit V-0 auch bei dünnen Wandstärken (d.h. Wandstärke von 1,5 mm).

Es wurde überraschend gefunden, dass Zusammensetzungen enthaltend

A) 60 - 95 Gew.-Teile, bevorzugt 65 - 90 Gew.-Teile, weiter bevorzugt 70 - 85 Gew.Teile, besonders bevorzugt 76 - 88 Gew.-Teile, aromatisches Polycarbonat und/oder aromatisches Polyestercarbonat,

B) 1,0 - 15,0 Gew.-Teile, bevorzugt 3,0 - 12,5 Gew.-Teile, besonders bevorzugt 4,0 - 10,0 Gew. -Teile, ein oder mehrere Pfropfpolymerisate von
B.19 bis 30 Gew.-% einer oder mehrerer Vinylmonomeren auf
B.2 91 bis 70 Gew.-% einer oder mehrerer Silikonacrylat-Komposit-Kautschuke als Pfropfgrundlage,
wobei sich die beiden genannten Kautschuk-Komponenten der Pfropfgrundlage im Komposit-Kautschuk gegenseitig durchdringen, so daß sie sich nicht wesentlich voneinander trennen lassen,

C) 1,0 - 20,0 Gew.-Teile, bevorzugt 1,0 - 15,0 Gew.-Teile, weiter bevorzugt 1,0 - 12,5 Gew.-Teile, besonders bevorzugt 1,5 - 10,0 Gew.-Teile, mindestens eines cyclischen Phosphazens der Struktur (X),

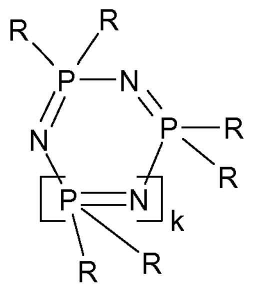

(X),

wobei

k für 1 oder eine ganze Zahl von 1 bis 10, vorzugsweise für eine Zahl von 1 bis 8, besonders bevorzugt 1 bis 5, steht, mit einem Trimerenanteil (k=1) von 60 bis 98 mol.-%,, weiter bevorzugt von 65 bis 95 mol.-%, besonders bevorzugt von 65 bis 90 mol.-%, und ganz besonders bevorzugt von 65 - 85 mol.-%, insbesondere 70 - 85 mol.-%, bezogen auf die Komponente C,

und wobei

R jeweils gleich oder verschieden ist und für einen Aminrest, jeweils, gegebenenfalls halogeniertes, vorzugsweise mit Fluor halogeniertes, C1- bis C8-Alkyl, vorzugsweise Methyl, Ethyl, Propyl oder Butyl, C1- bis C8- Alkoxy, vorzugsweise Methoxy, Ethoxy, Propoxy oder Butoxy, jeweils gegebenenfalls durch Alkyl, vorzugsweise C1-C4-Alkyl, und/oder Halogen, vorzugsweise Chlor und/oder Brom, substituiertes C5- bis C6-Cycloalkyl, jeweils gegebenenfalls durch Alkyl, vorzugsweise C1-C4-Alkyl, und/oder Halogen, vorzugsweise Chlor, Brom und/oder Hydroxy-substituiertes, C6- bis C20-Aryloxy, vorzugsweise Phenoxy, Naphthyloxy, jeweils gegebenenfalls durch Alkyl, vorzugsweise C1-C4-Alkyl, und/oder Halogen, vorzugsweise Chlor und/oder Brom, substituiertes C7- bis C12-Aralkyl, vorzugsweise Phenyl-C1-C4-alkyl, oder einen Halogen-Rest, vorzugsweise Chlor, oder einen OH-Rest steht.

D) 0 - 15,0 Gew.-Teile, bevorzugt 2,0 - 12,5 Gew.-Teile, weiter bevorzugt von 3,0 - 9,0 Gew.-Teile, besonders bevorzugt 3,0 - 6,0 Gew.-Teile kautschukfreies Vinyl(Co)Polymerisat oder Polyalkylenterephthalat,

E) 0 - 15,0 Gew.-Teile, bevorzugt von 0,05 - 15,00 Gew.-Teile, bevorzugt 0,2 - 10,0 Gew.-Teile, besonders bevorzugt 0,4 - 5,0 Gew.-Teile Additive ausgewählt aus der Gruppe, die Gleit- und Entformungsmittel, Nukleiermittel, Stabilisatoren, Antistatika, Farbstoffe, Pigmente sowie Flammschutzsynergisten außer Antidrippingmittel umfasst,

F) 0,05 bis 5,0 Gew.-Teilen, vorzugsweise 0,1 bis 2,0 Gew.-Teile, besonders bevorzugt 0,1 bis 1,0 Gew.-Teilen Antidrippingmittel.

wobei alle Gewichtsteilangaben vorzugsweise in der vorliegenden Anmeldung so normiert sind, dass die Summe der Gewichtsteile aller Komponenten A+B+C+D+E+F in der Zusammensetzung 100 ergeben
die Aufgabe der vorliegenden Erfindung erfüllen.

In einer bevorzugten Ausführungsform besteht die Zusammensetzung nur aus den Komponenten A bis F.

In einer bevorzugten Ausführungsform ist die Zusammensetzung frei von anorganischen Flammschutzmitteln und Flammschutzsynergisten, insbesondere Aluminiumhydroxid, Aluminiumoxidhydroxid sowie Arsen- und Antimonoxiden.

In einer bevorzugten Ausführungsform ist die Zusammensetzung frei von weiteren organischen Flammschutzmitteln, insbesondere Bisphenol-A-diphosphat-Oligomeren, Resorcinoldiphosphat-Oligomeren, Triphenylphosphat, Octamethyl-Resorcinoldiphosphat und Tetrabrom-Bisphenol-A-Disphosphat-Oligocarbonat.

Die bevorzugten Ausführungsformen können einzeln oder auch miteinanderverknüpft ausgeführt werden.

Gegenstand der Erfindung sind ebenfalls die Verwendung der Zusammensetzungen zur Herstellung von Formkörpern sowie die Formkörper erhältlich aus den Zusammensetzungen. Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten,

Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektr ogeräten, Gehäuse für Geräte zur Informationsverarbeitung und -Übermittlung, Gehäuse und Verkleidung von medizinischen Geräten, Gehäuse für Sicherheitseinrichtungen, Formteile für Sanitär- und Badausrüstungen, Abdeckgitter für Lüfteröffnungen und Gehäuse für Gartengeräte.

Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

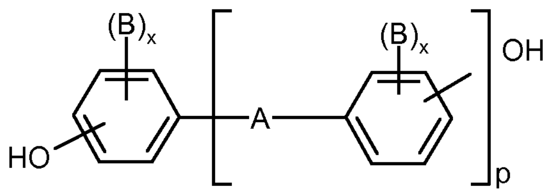

(I),

wobei

A eine Einfachbindung, $C_1$ bis $C_5$-Alkylen, $C_2$ bis $C_5$-Alkyliden, $C_5$ bis $C_6$-Cycloalkyliden, - O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

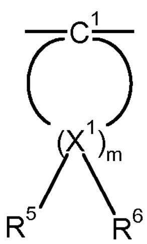

(II)

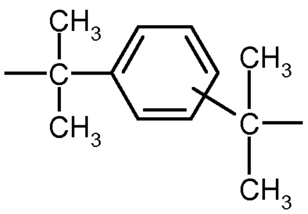

(III)

B jeweils $C_1$ bis $C_{12}$-Alkyl, vorzugsweise Methyl, Halogen, vorzugsweise Chlor und/oder Brom

| | |
|---|---|
| x | jeweils unabhängig voneinander 0, 1 oder 2, |
| p | 1 oder 0 sind, und |
| $R^5$ und $R^6$ | für jedes $X^1$ individuell wählbar, unabhängig voneinander Wasserstoff oder $C_1$ bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$ -cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha$, $\alpha$ -Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren diund tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10Mol%, bezogen auf die Molsumme der jeweils eingesetzten Diphenole.

Die thermoplastischen, aromatischen Polycarbonate haben mittlere Molekulargewichte (Gewichtsmittel $M_w$, gemessen durch GPC (Gelpermeationschromatographie) mit Polycarbonatstandard) von 15.000 bis 80.000 g/mol, vorzugsweise 19.000 bis 32.000 g/mol, besonders bevorzugt 22.000 bis 30.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Komponente B

Die Komponente B umfasst bevorzugt ein oder mehrere Pfropfpolymerisate hergestellt durch Pfropfreaktion von

B.1 9 bis 30 Gew.-% eines oder mehrerer Vinylmonomeren auf

B.2 91 bis 70 Gew.-% eines oder mehrerer Silikonacrylat- Komposit-Kautschuke als Pfropfgrundlage, wobei der Silikonacrylat-Kautschuk

> B.2.1 5 - 75 Gew.-%, vorzugsweise 7 bis 50 Gew.-%, besonders bevorzugt 9 bis 40 Gew.-%, Silikonkautschuk- und
>
> B.2.2 95 bis 25 Gew.-%, vorzugsweise 93 bis 50 Gew.-%, besonders bevorzugt 91 bis 60 Gew.-%, Polyalkyl(meth)acrylatkautschuk enthält,

wobei sich die beiden genannten Kautschuk-Komponenten B.2.1 und B.2.2 im Komposit-Kautschuk gegenseitig durchdringen, so daß sie sich nicht wesentlich voneinander trennen lassen. Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Geeignete Monomere B.1 sind Vinylmonomere wie Vinylaromaten und/oder kernsubstituierte Vinylaromaten (wie Styrol, $\alpha$-Methylstyrol, p-Methylstyrol, p-Chlorstyrol), Methacrylsäure-(C1-C8)-Alkylester (wie Methylmethacrylat, Ethylmethacrylat, 2-Ethylhexylmethacrylat, Allylmethacrylat), Acrylsäure-(C1-C8)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid).

Diese Vinylmonomere können alleine oder in Mischungen von mindestens zwei Monomeren verwendet werden.

Bevorzugte Monomere B.1 sind ausgewählt aus mindestens einem der Monomere Styrol, $\alpha$-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt vorzugsweise < 10°C, weiter bevorzugt < 0°C, besonders bevorzugt < -20°C.

Die Pfropfgrundlage B.2 hat im Allgemeinen eine mittlere Teilchengröße (d50-Wert) von 0,05 bis 10 $\mu$m, vorzugsweise 0,06 bis 5 $\mu$m, besonders bevorzugt 0,08 bis 1 $\mu$m.

Die Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt. Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2=C(R^2)\text{-}COO\text{-}(CH_2)_p\text{-}SiR^1nO_{(3-n)/2} \qquad (V\text{-}1)$$

$$CH_2=CH\text{-}SiR^1{}_nO_{(3-n)/2} \qquad (V\text{-}2)$$

oder

$$HS\text{-}(CH_2)_p\text{-}SiR^1{}_nO_{(3-n)/2} \qquad (V\text{-}3),$$

wobei

- R1 für C1-C4-Alkyl, vorzugsweise Methyl, Ethyl oder Propyl, oder Phenyl,
- R2 für Wasserstoff oder Methyl stehen,
- n 0, 1 oder 2 und
- p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ-Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Geeignete Polyalkyl(meth)acrylatkautschuk-Komponenten der Silikonacrylat-Kautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C1 bis C8-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C1-C8-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat.

Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk als wäßriger Latex hergestellt wird. Dabei kann der Silikonkautschuk durch Emulsionspolymerisation hergestellt werden, wie beispielsweise in US 2891920 und US 3294725 beschrieben. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wässrigen Natriumhydroxid, Kaliumhydroxid oder Natriumcarbonat-Lösung.

Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der Silikonacrylat-Pfropfkautschuke B werden die Monomere B.1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikonacrylat-Pfropfkautschuk wird der wässrige Latex in heißes Wasser gegeben, in dem zuvor Metallsalze gelöst wurden, wie z.B. Calciumchlorid oder Magnesiumsulfat. Dabei koaguliert der Silikonacrylat-Pfropfkautschuk und kann anschließend separiert werden.

<u>Komponente C</u>

Phosphazene gemäß Komponente C, welche gemäß der vorliegenden Erfindung eingesetzt werden, sind cyclische Phosphazene gemäß Formel (X)

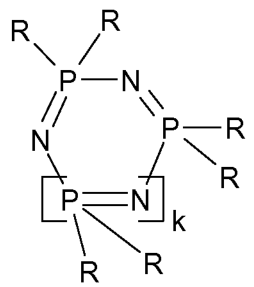

(X),

wobei

R jeweils gleich oder verschieden ist und für

- einen Aminrest,
- jeweils, gegebenenfalls halogeniertes, vorzugsweise mit Fluor halogeniertes, weiter bevorzugt monohalogeniertes, $C_1$- bis $C_8$-Alkyl, vorzugsweise Methyl, Ethyl, Propyl oder Butyl,
- $C_1$- bis $C_8$- Alkoxy, vorzugsweise Methoxy, Ethoxy, Propoxy oder Butoxy,
- jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cyclo-alkyl,
- jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy,
- jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder
- einen Halogen-Rest, vorzugsweise Chlor oder Fluor, oder
- einen OH-Rest steht.

k die oben genannte Bedeutung hat.

Bevorzugt sind:

Propoxyphosphazen, Phenoxyphosphazen, Methylphenoxyphosphazen, Aminophosphazen und Fluoralkylphosphazene, sowie Phosphazene der folgenden Strukturen:

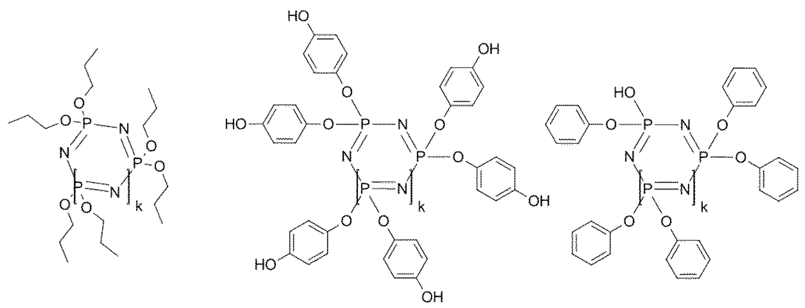

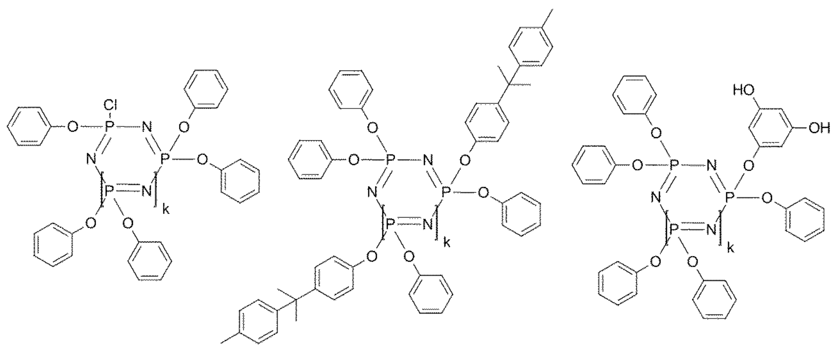

In den oben gezeigten Verbindungen ist k = 1, 2 oder 3.

Bevorzugt ist Phenoxyphosphazen (alle R = Phenoxy) mit einem Anteil an Oligomeren mit k = 1 (C1) von 60 bis 98 mol.-%.

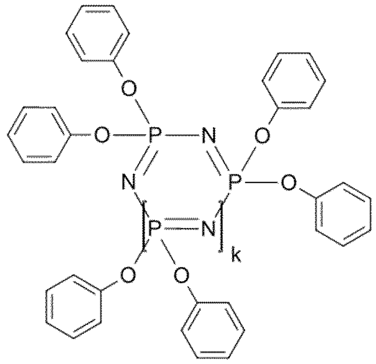

(XI)

Für den Fall, dass das Phosphazen gemäß Formel (X) am Phosphor Halogen-substitiert ist, z. B. aus unvollständig reagierten Ausgangsmaterial, ist der Anteil dieses am Phosphor Halogensubstituierten Phosphazens bevorzugt kleiner als 1000 ppm, weiter bevorzugt kleiner 500ppm.

Die Phosphazene können allein oder als Mischung eingesetzt werden, d.h. der Rest R kann gleich sein oder 2 oder mehr Reste in der Formel (X) können verschieden sein. Bevorzugt sind die Reste R eines Phosphazens identisch.

In einer weiter bevorzugten Ausführungsform werden nur Phosphazene mit gleichem R eingesetzt. In einer bevorzugten Ausführungsform beträgt der Anteil der Tetrameren (k=2) (C2) von 2 bis 50 mol.-% bezogen auf die Komponente C, weiter bevorzugt von 5 bis 40 mol.%, noch weiter bevorzugt von 10 bis 30 mol.-%, besonders bevorzugt von 10 bis 20 mol.-%.

In einer bevorzugten Ausführungsform beträgt der Anteil der höheren oligomeren Phosphazene (k=3, 4, 5, 6 und 7) (C3) von 0 bis 30 mol.-% bezogen auf die Komponente C, weiter bevorzugt von 2,5 bis 25 mol.%, noch weiter bevorzugt von 5 bis 20 mol.-%, und besonders bevorzugt von 6 - 15 mol.-%.

In einer bevorzugten Ausführungsform beträgt der Anteil d er Oligomere mit k>= 8 (C4) von 0 bis 2,0 mol.-% bezogen auf die Komponente C, und bevorzugt von 0,10 bis 1,00 mol.-% .

In einer weiter bevorzugten Ausführungsform erfüllen die Phosphazene der Komponente C alle drei zuvor genannten Bedingungen hinsichtlich der Anteile (C2 - C4).

Bevorzugt ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3,4,5,6 und 7) von 5 bis 20 mol.-% und Phosphazen-Oligomere mit k>= 8 von 0 bis 2 mol.-%, bezogen auf die Komponente C.

Besonders bevorzugt ist die Komponente C ein Phenoxyphosphazen mit einem Trimerenanteil (k=1) von 70 bis 85 mol.-%, einem Tetramerenanteil (k=2) von 10 bis 20 mol.-%, einem Anteil an höheren oligomeren Phosphazene (k=3,4,5,6 und 7) von 6 bis 15 mol.-% und Phosphazen-Oligomere mit k>= 8 von 0,1 bis 1 mol.-%, bezogen auf die Komponente C.

In einer weiteren besonders bevorzugten Ausführungsform ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3,4,5,6 und 7) von 5 bis 15 mol.-% und Phosphazen-Oligomere mit k>= 8 von 0 bis 1 mol.-%, bezogen auf die Komponente C.

Mit n wird der gewichtete arithmetische Mittelwert von k gemäß folgender Formel definiert:

$$n = \frac{\sum_{i=1}^{max} k_i \cdot x_i}{\sum_{i=1}^{max} x_i}$$

Dabei ist $x_i$ der Anteil des Oligomers $k_i$ und es gilt also, dass die Summe aller $x_i$ gleich 1 ist.
In einer alternativen Ausführungsform ist n im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

Die Phosphazene und deren Herstellung sind beispielsweise in EP-A 728 811, DE-A 1 961668 und WO 97/40092 beschrieben.

Die Oligomer-Zusammensetzungen der Phosphazene in den jeweiligen Blendproben lassen sich auch nach Compoundieren mittels $^{31}P$ NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

Komponente D

Die Komponente D umfasst ein oder mehrere thermoplastische Vinyl(Co)Polymerisate oder Polyalkylenterephthalate.

Geeignet als Vinyl(Co)Polymerisate D sind Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

> D.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und
> D.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D sind harzartig, thermoplastisch und kautschukfrei. Besonders bevorzugt ist das Copolymerisat aus D.1 Styrol und D.2 Acrylnitril.

Die (Co)Polymerisate gemäß D sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol, besonders bevorzugt zwischen 100.000 und 150.000 g/mol.

In einer besonders bevorzugten Ausführungsform ist D ein Copolymerisat aus 77 Gew.-% Styrol und 23 Gew.-% Acrylnitril mit einem gewichtsgemittelten Molekulargewicht $M_w$ von 130.000 g/mol.

Geeignet als Komponente D enthalten die Zusammensetzungen erfindungsgemäß ein oder eine Mischung aus zwei oder mehr unterschiedlichen Polyalkylenterephthalaten.

Polyalkylenterephthalate im Sinne der Erfindung sind Polyalkylenterephthalate, die sich von Terephthalsäure (oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente D bevorzugt Polybutylenterephthalat und/oder Polytrimethylenterephthalat, am meisten bevorzugt Polybutylenterephthalat eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise mindestens 90 Mol.-%, bezogen auf die Diolkomponente, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.
Die bevorzugten Polyalkylenterephthalate können neben Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxy-ethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden, wobei hier bevorzugt Gemische von Polyalkylenterephthalaten mit anderen Polyestern eingesetzt werden.

<u>Weitere Additive E</u>

Die Zusammensetzung kann weitere übliche Polymeradditive wie Flammschutzsynergisten außer Antidrippingmittel, Gleit- und Entformungsmittel (beispielsweise Pentaerythrittetrastearat), Nukleiermittel, Stabilisatoren (beispielsweise UV/Licht-Stabilisatoren, Thermostabilisatoren, Antioxidantien, Umesterungsinhibitoren, Hydrolyseschutzmittel), Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe, Pigmente, Füll- und Verstärkungsstoffe, insbesondere Glasfasern, mineralische Verstärkungsstoffe und Carbonfasern, enthalten.

Als Stabilisatoren werden bevorzugt sterisch gehinderte Phenole und Phosphite oder deren Gemische, wie beispielsweise Irganox© B900 (Ciba Speciality Chemicals), verwendet. Pentaerythrittetrastearat wird bevorzugt als Entformungsmittel verwendet. Weiterhin wird vorzugsweise Ruß als Schwarzpigment (z.B. Blackpearls) zugesetzt.

Besonders bevorzugte Formmassen enthalten als Komponente E neben optionalen weiteren Additiven ein Entformungsmittel, besonders bevorzugt Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen. Besonders bevorzugte Formmassen enthalten als Komponente E neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teile, besonders bevorzugt 0,06 bis 0,3 Gew.-Teilen.

Weiterhin ist die Kombination aus PTFE (Komponente F), Pentaerythrittetrastearat und Irganox B900 mit einem phosphorbasiertem Flammschutzmittel, als Komponente C) besonders bevorzugt.

<u>Kompenente F</u>

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1000, vorzugsweise 0,08 bis 20 $\mu$m. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm$^3$, die mittlere Teilchengröße zwischen 0,05 und 1000 $\mu$m liegen.

Die erfindungsgemäß bevorzugtne fluorierten Polyolefine haben mittlere Teilchendurchmesser von 0,05 bis 20 $\mu$m, vorzugsweise 0,08 bis 10 $\mu$m, und eine Dichte von 1,2 bis 1,9 g/cm$^3$.

Geeignete, in Pulverform einsetzbare fluorierte Polyolefine F sind Tetrafluorethylenpolymerisate mit mittleren Teilchendurchmessern von 100 bis 1000 $\mu$m und Dichten von 2,0 g/cm$^3$ bis 2,3 g/cm$^3$. Geeignete Tetrafluorethylenpolymerisat-Pulver sind handelsübliche Produkte und werden beispielsweise von der Fa. DuPont unter dem Handelsnamen Teflon® angeboten.

Besonders bevorzugte flammgeschützte Zusammensetzungen enthalten als Komponente F neben optionalen weiteren Additiven ein fluoriertes Polyolefin in 0,05 bis 5,0 Gew.-Teilen, vorzugsweise 0,1 bis 2,0 Gew.-Teile, besonders bevorzugt 0,3 bis 1,0 Gew.-Teilen.

Die folgenden Beispiele dienen der weiteren Erläuterung der Erfindung.

**Komponente A1**

Lineares Polycarbonat auf Basis Bisphenol-A mit einem gewichtsgemittelten Molekulargewicht Mw von 27500 g/mol (bestimmt durch GPC in Dichlormethan mit Polycarbonat als Standard).

**Komponente A2**

Lineares Polycarbonat auf Basis Bisphenol-A mit einem gewichtsgemittelten Molekulargewicht Mw von 25000 g/mol (bestimmt durch GPC in Dichlormethan mit Polycarbonat als Standard).

**Komponente B**

B1

Pfropfpolymerisat hergestellt durch Reaktion von 14 Gew.-% Methylmethacrylat auf 86 Gew.-% eines Silikonacrylat-Komposit-Kautschukes als Pfropfgrundlage, wobei der Silikonacrylat-Kautschuk 36 Gew.-% Silikonkautschuk- und 64 Gew.-% Polyalkyl(meth)acrylatkautschuk-enthält, und wobei sich die beiden genannten Kautschuk-Komponenten im Komposit-Kautschuk gegenseitig durchdringen, so daß sie sich nicht wesentlich voneinander trennen lassen.

B2

Pfropfpolymerisat hergestellt durch Reaktion von 17 Gew.-% Methylmethacrylat auf 83 Gew.-% eines Silikonacrylat-Komposit-Kautschukes als Pfropfgrundlage, wobei der Silikonacrylat-Kautschuk 11 Gew.-% Silikonkautschuk- und 89 Gew.-% Polyalkyl(meth)acrylatkautschuk-enthält, und wobei sich die beiden genannten Kautschuk-Komponenten im Komposit-Kautschuk gegenseitig durchdringen, so daß sie sich nicht wesentlich voneinander trennen lassen.

B3

Pfropfpolymerisat hergestellt durch Reaktion von 30 Gew.-% Methylmethacrylat auf 70 Gew.-% eines Butylacrylat-Kautschukes als Pfropfgrundlage hergestellt durch Emulsionspolymerisation.

**Komponente C1**

Phenoxyphosphazen der Formel (XI) mit einem Anteil an Oligomeren mit k = 1 von 70 mol.-%, einem Anteil an Oligomeren mit k = 2 von 18 mol.-% und einem Anteil an Oligomeren mit k ≥ 3 von 12 mol.-%.

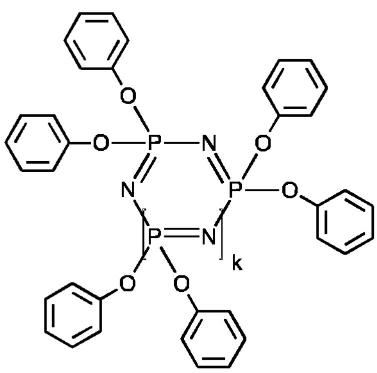

**(XI)**

**Komponente C2**

Bisphenol-A basierendes Oligophosphat mit 8,9% Phosphorgehalt (BDP).

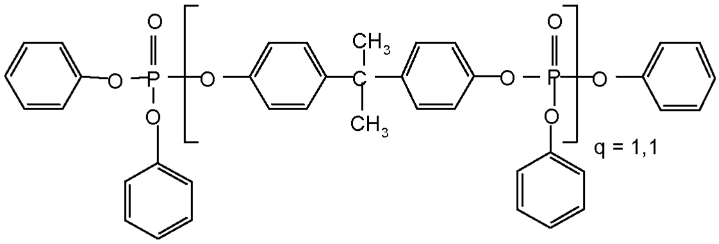

q = 1,1

## Komponente D

Copolymerisat aus 77 Gew.-% Styrol und 23 Gew.-% Acrylnitril mit einem gewichtsgemittelten Molekulargewicht Mw von 130 kg/mol (bestimmt durch GPC), hergestellt nach dem Masseverfahren.

## Komponente E1

Pentaerythrittetrastearat als Gleit-/Entformungsmittel

## Komponente E2

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

## Komponente F1

Polytetrafluorethylen-Pulver, CFP 6000 N, Fa. Du Pont

## Komponente F2

Koagulierte Mischung von Emulsionen fluorierter Polyolefine mit Emulsionen eines Copolymerisats auf Styrol-Acrylnitril-Basis (je 50 Gew.-%) (Cycolac INP 449 der Fa. Sabic).

## Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 240°C, Werkzeugtemperatur 80°C, Fließfrontgeschwindigkeit 240 mm/s).

Zur Charakterisierung der Eigenschaften der Materialien wurden folgende Methoden angewandt:

Die **IZOD Kerbschlagzähigkeit** wurde gemessen nach ISO 180/1A an einseitig angespritzten Prüfstäben der Dimension 80 mm x10 mm x 4 mm.

Die **Bindenahtfestigkeit anF** wurde gemessen nach ISO 179/1eU an einem beidseitig angespritzten Prüfstab der Dimension 80x10x4 mm.

Das **Brandverhalten** wird nach UL 94V an Stäben der Abmessung 127 x 12,7 x 1,5 mm gemessen.

Die **Wärmeformbeständigkeit** wurde gemessen gemäß ISO 306 (Vicat-Erweichungstemperatur, Verfahren B mit 50 N Belastung und einer Heizrate von 120 K/h) an einseitig angespritzten Prüfstäben der Dimension 80 mm x10 mm x 4 mm.

Das **Spannungsrißverhalten (ESC-Verhalten)** wurde an Stäben der Abmessung 80 x 10 x 4 mm, Verarbeitungstemperatur 240°C, untersucht. Als Testmedium wurde Rapsöl verwendet. Die Probekörper wurden mittels einer Kreisbogenschablone vorgedehnt (Vordehnung in Prozent) und bei Raumtemperatur im Testmedium gelagert. Das Spannungsrißverhalten wurde als Zeit bis zur Rißbildung bzw. den Bruch im Testmedium ausgewertet.

**Tabelle 1:** Zusammensetzung und Eigenschaften der Formmassen

| **Komponenten (Gew.-Teile)** | Bsp. 1 | Bsp. 2 | Bsp. 3 | Bsp. 4 | Bsp. 5 | Bsp. 6 (Vgl.) |
|---|---|---|---|---|---|---|
| A1 | | | | 83,2 | 83,2 | 83,2 |
| A2 | 94,4 | 94,4 | 94,4 | | | |
| B1 | 2,2 | | | 9 | | 9 |
| B2 | | 2,2 | | | 9 | |
| B3 | | | 2,2 | | | |
| C1 | 2,5 | 2,5 | 2,5 | 6,5 | 6,5 | |
| C2 | | | | | | 6,5 |
| F1 | 0,4 | 0,4 | 0,4 | | | |
| F2 | | | | 0,8 | 0,8 | 0,8 |
| E1 | 0,4 | 0,4 | 0,4 | 0,4 | 0,4 | 0,4 |
| E2 | 0,1 | 0,1 | 0,1 | 0,1 | 0,1 | 0,1 |
| **Eigenschaften** | | | | | | |
| Vicat B 120 | 136 | 136 | 135 | 124 | 125 | 119 |
| UL 94 V bei 1,5 mm (7d/70°C) Dicke/ Gesamtnachbrennzeit | V-0/12s | V-0/14s | V-0/13s | V-0/18s | V-0/29s | V-0/36s |
| UL 94 V bei 1,0 mm (7d/70°C) Dicke/ Gesamtnachbrennzeit | V-0/37s | V-0/41s | V-0/25s | | | |
| IZOD-Kerbschlag [kJ/m$^2$] | 63,9 | 63,8 | 61,1 | 60,5 | 55,6 | 60 |
| Bindenahtfestigkeit [kJ/m$^2$] | 101,1 | 118,5 | 125,2 | 40,9 | 75,4 | 26,7 |
| ESC-Test (Rapsöl), 2,4% Randfaserdehnung, Zeit zum Bruch [min] | 160 | 138 | 116 | 324 | 351 | 295 |

## Patentansprüche

1. Zusammensetzungen enthaltend

A) 60 - 95 Gew.-Teile aromatisches Polycarbonat und/oder aromatisches Polyestercarbonat,
B) 1,0 - 15,0 Gew.-Teile ein oder mehrere Pfropfpolymerisate von

B.1 9 bis 30 Gew.-% einer oder mehrerer Vinylmonomeren auf
B.2 91 bis 70 Gew.-% einer oder mehrerer Silikonacrylat-Komposit-Kautschuke als Pfropfgrundlage,

wobei sich die beiden genannten Kautschuk-Komponenten der Pfropfgrundlage im Komposit-Kautschuk gegenseitig durchdringen, so daß sie sich nicht wesentlich voneinander trennen lassen,
C) 1,0 - 20,0 Gew.-Teile, mindestens eines cyclischen Phosphazens, gemäß Formel (X)

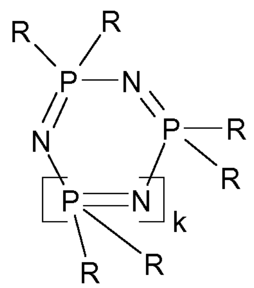

(X),

wobei

k für 1 oder eine ganze Zahl von 1 bis 10, vorzugsweise für eine Zahl von 1 bis 8, besonders bevorzugt 1 bis 5, steht, wobei der Trimerenanteil (k=1) von 60 bis 98 mol.-% bezogen auf die Komponente C beträgt

und wobei

R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, $C_1$- bis $C_8$- Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht.

D) 0 - 15,0 Gew.-Teile kautschukfreies Vinyl(Co)Polymerisat oder Polyalkylenterephthalat,
E) 0 - 15,0 Gew.-Teile Additive ausgewählt aus der Gruppe, die Gleit- und Entformungsmittel, Nukleiermittel, Stabilisatoren, Antistatika, Farbstoffe, Pigmente sowie Flammschutzsynergisten außer Antidrippingmittel umfasst,
F) 0,05 bis 5,0 Gew.-Teilen, vorzugsweise 0,1 bis 2,0 Gew.-Teile, besonders bevorzugt 0,1 bis 1,0 Gew.-Teilen Antidrippingmittel,

wobei alle Gewichtsteilangaben vorzugsweise so normiert sind, dass die Summe der Gewichtsteile aller Komponenten A+B+C+D+E+F in der Zusammensetzung 100 ergibt.

**2.** Zusammensetzungen nach Anspruch 1, **dadurch gekennzeichnet**, der Anteil der Trimeren (k=1) 65 bis 95 mol.-%, bevorzugt 65 bis 90 mol.%, bezogen auf die Komponente C beträgt.

**3.** Zusammensetzungen nach Anspruch 1 oder 2, **dadurch gekennzeichnet, dass** der Anteil der Komponente C 1,5 - 10,0 Gew.-Teile beträgt.

**4.** Zusammensetzungen nach einem der vorhergehenden Ansprüche, **dadurch gekennzeichnet, dass** die Komponente C ausgewählt ist aus der Gruppe, die Propoxyphosphazene, Phenoxyphosphazene, Methylphenoxyphosphazene, Aminophosphazene und Fluoralkylphosphazene umfaßt.

**5.** Zusammensetzungen nach einem der vorhergehenden Ansprüche, **dadurch gekennzeichnet, dass** R = Phenoxy ist.

**6.** Zusammensetzungen nach Anspruch 1, **dadurch gekennzeichnet**, der Anteil der Trimeren (k=1) 65 - 85 mol.-%, bezogen auf die Komponente C beträgt.

**7.** Zusammensetzungen nach einem der vorhergehenden Ansprüche, **dadurch gekennzeichnet, dass** der Trimerenanteil (k=1) von 65 bis 85 mol.-%, der Tetramerenanteil (k=2) von 10 bis 20 mol.-%, der Anteil an höheren oligomeren Phosphazene (k=3,4,5,6 und 7) von 5 bis 15 mol.-%, und der Anteil an Phosphazen-Oligomere mit k>= 8 von 0 bis 1 mol.-%, jeweils bezogen auf die Komponente C, beträgt.

**8.** Zusammensetzungen nach einem der vorhergehenden Ansprüche, **dadurch gekennzeichnet, dass** Komponente D) in einem Anteil von 3,0 - 6,0 Gew.-Teilen enthalten ist.

**9.** Zusammensetzungen nach einem der vorhergehenden Ansprüche, **dadurch gekennzeichnet, dass** die thermoplastischen, aromatischen Polycarbonate ein mittleres Molekulargewicht (Gewichtsmittel) von 22.000 bis 30.000 g/mol aufweisen.

**10.** Zusammensetzungen nach einem der vorhergehenden Ansprüche, **dadurch gekennzeichnet, dass** die Pfropfgrundlage in Komponente B ein Silikonacrylat-Kautschuk aus 9 bis 40 Gew.-%, Silikonkautschuk und 91 bis 60

Gew.-%, Polyalkyl(meth)acrylatkautschuk enthält, wobei sich die beiden genannten Kautschuk-Komponenten im Komposit-Kautschuk gegenseitig durchdringen, so daß sie sich nicht wesentlich voneinander trennen lassen.

**11.** Verwendung der Zusammensetzungen nach einem der Ansprüche 1 bis 10 zur Herstellung von spritzgegossenen oder thermogeformten Formkörpern.

**12.** Formkörper erhältlich aus Zusammensetzungen gemäß einem der Ansprüche 1-10.

## Claims

**1.** Compositions comprising

A) from 60 to 95 parts by weight of aromatic polycarbonate and/or aromatic polyester carbonate,
B) from 1.0 to 15.0 parts by weight of one or more graft polymers of

B.1 from 9 to 30 wt.% of one or more vinyl monomers on
B.2 from 91 to 70 wt.% of one or more silicone-acrylate composite rubbers as graft base,

wherein the two mentioned rubber components of the graft base interpenetrate in the composite rubber so that they are substantially inseparable from one another,
C) from 1.0 to 20.0 parts by weight of at least one cyclic phosphazene according to formula (X)

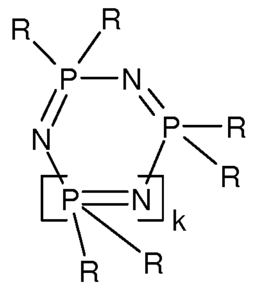

(X),

wherein

k represents 1 or an integer from 1 to 10, preferably a number from 1 to 8, particularly preferably from 1 to 5, wherein the trimer content (k=1) is from 60 to 98 mol%, based on component C,

and wherein

R is in each case identical or different and represents an amine radical; $C_1$- to $C_8$-alkyl, preferably methyl, ethyl, propyl or butyl, each optionally halogenated, preferably halogenated with fluorine; $C_1$- to $C_8$-alkoxy, preferably methoxy, ethoxy, propoxy or butoxy; $C_5$- to $C_6$-cycloalkyl each optionally substituted by alkyl, preferably $C_1$-$C_4$-alkyl, and/or by halogen, preferably chlorine and/or bromine; $C_6$- to $C_{20}$-aryloxy, preferably phenoxy, naphthyloxy, each optionally substituted by alkyl, preferably $C_1$-$C_4$-alkyl, and/or by halogen, preferably chlorine, bromine, and/or by hydroxy; $C_7$- to $C_{12}$-aralkyl, preferably phenyl-$C_1$-$C_4$-alkyl, each optionally substituted by alkyl, preferably $C_1$-$C_4$-alkyl, and/or by halogen, preferably chlorine and/or bromine; or a halogen radical, preferably chlorine; or an OH radical,

D) from 0 to 15.0 parts by weight of rubber-free vinyl (co)polymer or polyalkylene terephthalate,
E) from 0 to 15.0 parts by weight of additives selected from the group comprising lubricants and demoulding agents, nucleating agents, stabilisers, antistatics, colourants, pigments, and flame-retardant synergists with the exception of antidripping agents,
F) from 0.05 to 5.0 parts by weight, preferably from 0.1 to 2.0 parts by weight, particularly preferably from 0.1 to 1.0 part by weight, of antidripping agents,

wherein all the parts by weight are preferably so normalised that the sum of the parts by weight of all the components

A+B+C+D+E+F in the composition is 100.

2. Compositions according to claim 1, **characterised in that** the content of trimers (k=1) is from 65 to 95 mol%, preferably from 65 to 90 mol%, based on component C.

3. Compositions according to claim 1 or 2, **characterised in that** the amount of component C is from 1.5 to 10.0 parts by weight.

4. Compositions according to any one of the preceding claims, **characterised in that** component C is selected from the group comprising propoxyphosphazenes, phenoxyphosphazenes, methylphenoxyphosphazenes, aminophosphazenes and fluoroalkylphosphazenes.

5. Compositions according to any one of the preceding claims, **characterised in that** R is phenoxy.

6. Compositions according to claim 1, **characterised in that** the content of trimers (k=1) is from 65 to 85 mol%, based on component C.

7. Compositions according to any one of the preceding claims, **characterised in that** the trimer content (k=1) is from 65 to 85 mol%, the tetramer content (k=2) is from 10 to 20 mol%, the content of higher oligomeric phosphazenes (k = 3, 4, 5, 6 and 7) is from 5 to 15 mol%, and the content of phosphazene oligomers with k >= 8 is from 0 to 1 mol%, in each case based on component C.

8. Compositions according to any one of the preceding claims, **characterised in that** component D) is present in an amount of from 3.0 to 6.0 parts by weight.

9. Compositions according to any one of the preceding claims, **characterised in that** the thermoplastic aromatic polycarbonates have a mean molecular weight (weight-average) of from 22,000 to 30,000 g/mol.

10. Compositions according to any one of the preceding claims, **characterised in that** the graft base in component B comprises a silicone-acrylate rubber of from 9 to 40 wt.% silicone rubber and from 91 to 60 wt.% polyalkyl (meth)acrylate rubber, wherein the two mentioned rubber components interpenetrate in the composite rubber so that they are substantially inseparable from one another.

11. Use of the compositions according to any one of claims 1 to 10 in the production of injection-moulded or thermoformed moulded articles.

12. Moulded articles obtainable from compositions according to any one of claims 1 to 10.

## Revendications

1. Compositions contenant :

A) 60 à 95 parties en poids d’un polycarbonate aromatique et/ou d’un polyester-carbonate aromatique,
B) 1,0 à 15,0 parties en poids d’un ou de plusieurs polymères greffés de

B.1 9 à 30 % en poids d’un ou de plusieurs monomères de vinyle sur
B.2 91 à 70 % en poids d’un ou de plusieurs caoutchoucs composites d’acrylate de silicone en tant que base de greffage,

les deux composants de caoutchouc mentionnés de la base de greffage se pénétrant mutuellement dans le caoutchouc composite, de sorte qu’ils ne puissent essentiellement pas se séparer l’un de l’autre,
C) 1,0 à 20,0 parties en poids d’au moins un phosphazène cyclique selon la formule (X)

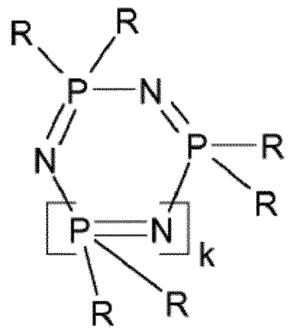

(X),

dans laquelle
k représente 1 ou un nombre entier de 1 à 10, de préférence un nombre de 1 à 8, de manière particulièrement préférée 1 à 5,
la proportion de trimères (k = 1) étant de 60 à 98 % en moles par rapport au composant C,
et
les R étant à chaque fois identiques ou différents, et représentant un radical amine, alkyle en $C_1$-$C_8$ à chaque fois éventuellement halogéné, de préférence halogéné avec fluor, de préférence méthyle, éthyle, propyle ou butyle, alcoxy en $C_1$-$C_8$, de préférence méthoxy, éthoxy, propoxy ou butoxy, cycloalkyle en $C_5$ à $C_6$ à chaque fois éventuellement substitué par alkyle, de préférence alkyle en $C_1$-$C_4$, et/ou halogène, de préférence chlore et/ou brome, aryloxy en $C_6$ à $C_{20}$ à chaque fois éventuellement substitué par alkyle, de préférence alkyle en $C_1$-$C_4$, et/ou halogène, de préférence chlore, brome et/ou hydroxy, de préférence phénoxy, naphtyloxy, aralkyle en $C_7$ à $C_{12}$ à chaque fois éventuellement substitué par alkyle, de préférence alkyle en $C_1$-$C_4$, et/ou halogène, de préférence chlore et/ou brome, de préférence phényl-alkyle en $C_1$-$C_4$, ou un radical halogène, de préférence chlore, ou un radical OH,
D) 0 à 15,0 parties en poids d'un (co)polymère de vinyle sans caoutchouc ou de polyalkylène téréphtalate,
E) 0 à 15,0 parties en poids d'additifs choisis dans le groupe comprenant les lubrifiants et les agents de démoulage, les agents de nucléation, les stabilisateurs, les antistatiques, les colorants, les pigments, ainsi que les synergistes ignifuges à l'exception des agents anti-égouttement,
F) 0,05 à 5,0 parties en poids, de préférence 0,1 à 2,0 parties en poids, de manière particulièrement préférée 0,1 à 1,0 partie en poids d'agents anti-égouttement,

toutes les indications de parties en poids étant de préférence normées de sorte que la somme des parties en poids de tous les composants A+B+C+D+E+F dans la composition soit de 100.

2. Compositions selon la revendication 1, **caractérisées en ce que** la proportion de trimères (k = 1) est de 65 à 95 % en moles, de préférence de 65 à 90 % en moles, par rapport au composant C.

3. Compositions selon la revendication 1 ou 2, **caractérisées en ce que** la proportion du composant C est de 1,5 à 10,0 parties en poids.

4. Compositions selon l'une quelconque des revendications précédentes, **caractérisées en ce que** le composant C est choisi dans le groupe comprenant les propoxyphosphazènes, les phénoxyphosphazènes, les méthylphénoxyphosphazènes, les aminophosphazènes et les fluoroalkylphosphazènes.

5. Compositions selon l'une quelconque des revendications précédentes, **caractérisées en ce que** R = phénoxy.

6. Compositions selon la revendication 1, **caractérisées en ce que** la proportion de trimères (k = 1) est de 65 à 85 % en moles, par rapport au composant C.

7. Compositions selon l'une quelconque des revendications précédentes, **caractérisées en ce que** la proportion de trimères (k = 1) est de 65 à 85 % en moles, la proportion de tétramères (k = 2) est de 10 à 20 % en moles, la proportion de phosphazènes oligomères supérieurs (k = 3, 4, 5, 6 et 7) est de 5 à 15 % en moles, et la proportion d'oligomères de phosphazène avec k ≥ 8 est de 0 à 1 % en moles, à chaque fois par rapport au composant C.

8. Compositions selon l'une quelconque des revendications précédentes, **caractérisées en ce que** le composant D) est contenu en une proportion de 3,0 à 6,0 parties en poids.

9. Compositions selon l'une quelconque des revendications précédentes, **caractérisées en ce que** les polycarbonates aromatiques thermoplastiques présentent un poids moléculaire moyen (moyenne en poids) de 22 000 à 30 000 g/mol.

10. Compositions selon l'une quelconque des revendications précédentes, **caractérisées en ce que** la base de greffage dans le composant B contient un caoutchouc d'acrylate de silicone constitué de 9 à 40 % en poids de caoutchouc de silicone et 91 à 60 % en poids de caoutchouc de poly(méth)acrylate d'alkyle, les deux composants de caoutchouc mentionnés se pénétrant mutuellement dans le caoutchouc composite, de sorte qu'ils ne puissent essentiellement pas se séparer l'un de l'autre.

11. Utilisation des compositions selon l'une quelconque des revendications 1 à 10 pour la fabrication de corps moulés par injection ou thermoformés.

12. Corps moulé pouvant être obtenu à partir de compositions selon l'une quelconque des revendications 1 à 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1095099 A1
- EP 1196498 A1
- EP 1095100 A1
- EP 1095097 A1
- JP 2000351893 A
- JP 7038462 A
- JP 19990176718 B
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- US 5807914 A
- EP 430134 A
- US 4888388 A
- US 2891920 A
- US 3294725 A
- DE OS3631540 A
- EP 249964 A
- EP 728811 A
- DE 1961668 A
- WO 9740092 A
- DE 2407674 A
- DE 2407776
- DE 2715932
- DE 1900270 A
- US 3692744 A
- US PS3671487 A
- US 3723373 A
- US 3838092 A
- US 2393967 A


### In der Beschreibung aufgeführte Nicht-Patentliteratur


- **SCHNELL.** Chemistry and Physics of Polycarbonates. Interscience Publishers, 1964
- Kunststoff-Handbuch. Karl-Hanser-Verlag, 1973, vol. VIII, 695 FF
- **SCHILDKNECHT.** Vinyl and Related Polymers. John Wiley & Sons, Inc, 1962, 484-494
- **WALL.** Fluorpolymers. Wiley-Interscience, John Wiley & Sons, Inc, 1970, vol. 13, 623-654
- Modern Plastics Encyclopedia. Mc Graw-Hill, Inc, Oktober 1970, vol. 47, 134, , 774
- Modern Plastics Encyclopedia. Mc Graw-Hill, Inc, Oktober 1975, vol. 52, 27, , 28, , 472